# EUROPEAN PATENT APPLICATION

(11) **EP 4 509 882 A1**
(43) Date of publication of application: **19.02.2025**
(21) Application number: 24194479.2
(22) Date of filing: 14.08.2024
(51) Int. Cl.: G01V 1/047

(54) **IMAGING A SUBTERRANEAN FORMATION THROUGH ACOUSTIC ENERGY DELIVERED THROUGH A LIQUID**

(30) Priority: 14.08.2023 US 202318233584
(71) Applicant: X Development LLC, Mountain View, CA 94043 (US)
(72) Inventor: MILLER, Alex S., Cambridge (US); CLAPP, Robert, Sunnyvale (US); RAGHAVAN, Aparajit, Menlo Park (US); GONCHARUK, Artem, Mountain View (US); SMITH, Kevin Forsythe, Pleasanton (US)
(74) Representative: Derry, Paul Stefan

(57) **Abstract**

Techniques for imaging a subterranean formation include activating an acoustic energy source that is at least partially submerged in a volume of liquid on or under a terranean surface; based on the activating, producing acoustic wave energy that travels through the volume of liquid and to a subterranean zone below the terranean surface; receiving, at one or more acoustic receivers, reflected acoustic wave energy from the subterranean zone; and generating, with a control system, data associated with the subterranean zone based on the reflected acoustic wave energy.

## Description

### TECHNICAL FIELD

This disclosure generally relates to imaging one or more subterranean formations and, more particularly, imaging one or more subterranean formations with acoustic wave energy that is delivered to the formation through a volume of liquid.

### BACKGROUND

Monitoring the subsurface can be achieved in seismic imaging where a variety of sound generators are used. Examples include thumper trucks, explosives, and air guns. Deployment of such sound generators can be costly and time-consuming. In particular, these examples of sound generators can be loud and physically disruptive, thereby rendering these examples unsuitable in an inhabited environment, for example, an urban environment.

### SUMMARY

In an example implementation, a method includes activating an acoustic energy source that is at least partially submerged in a volume of liquid on or under a terranean surface; based on the activating, producing acoustic wave energy that travels through the volume of liquid and to a subterranean zone below the terranean surface; receiving, at one or more acoustic receivers, reflected acoustic wave energy from the subterranean zone; and generating, with a control system, data associated with the subterranean zone based on the reflected acoustic wave energy.

In an aspect combinable with the example implementation, the data includes an image of the subterranean zone.

In another aspect combinable with any of the previous aspects, the liquid includes water.

In another aspect combinable with any of the previous aspects, the volume of liquid includes a natural body of water.

In another aspect combinable with any of the previous aspects, the natural body of water includes a surface coincident with the terranean surface.

In another aspect combinable with any of the previous aspects, the volume of liquid includes a human-made volume of liquid.

In another aspect combinable with any of the previous aspects, the human-made volume of liquid is enclosed within a container.

In another aspect combinable with any of the previous aspects, the container is at least partially buried under the terranean surface.

In another aspect combinable with any of the previous aspects, the container is wholly buried under the terranean surface.

Another aspect combinable with any of the previous aspects further includes repeatedly activating the acoustic energy source; and for each activation, producing acoustic wave energy that travels through the volume of liquid and to the subterranean zone below the terranean surface.

In another aspect combinable with any of the previous aspects, each activation of the acoustic energy source occurs at a specified time interval apart from a previous activation of the acoustic energy source.

In another aspect combinable with any of the previous aspects, generating data associated with the subterranean zone based on the reflected acoustic wave energy includes: generating, with the control system, an image of the subterranean zone that is associated with each activation of the acoustic energy source and a time instant or time interval to generate a plurality of time-dependent images of the subterranean zone.

Another aspect combinable with any of the previous aspects further includes aggregating, with the control system, the plurality of time-dependent images of the subterranean zone into an image model of the subterranean zone.

Another aspect combinable with any of the previous aspects further includes determining, with the control system, movement of an underground fluid through the subterranean zone based on the plurality of time-dependent images of the subterranean zone.

In another aspect combinable with any of the previous aspects, the underground fluid includes carbon dioxide.

In another aspect combinable with any of the previous aspects, the acoustic energy source includes a plurality of acoustic energy generators.

Another aspect combinable with any of the previous aspects further includes serially activating the plurality of acoustic energy generators; and for each activation, producing acoustic wave energy that travels through the volume of liquid and to the subterranean zone below the terranean surface.

In another aspect combinable with any of the previous aspects, each of the plurality of acoustic energy generators includes an explosive device.

Another aspect combinable with any of the previous aspects further includes serially activating the explosive devices; and for each activation, producing acoustic wave energy that travels through the volume of liquid and to the subterranean zone below the terranean surface.

In another aspect combinable with any of the previous aspects, the one or more acoustic receivers is positioned on or under the terranean surface.

In another example implementation, a system includes an acoustic energy source that is at least partially submerged in a volume of liquid on or under a terranean surface; one or more acoustic receivers positioned on or under the terranean surface; and a control system communicably coupled to the acoustic energy source and the one or more acoustic receivers. The control system is configured to perform operations including activating the acoustic energy source to produce acoustic wave energy that travels through the volume of liquid and to a subterranean zone below the terranean surface; identifying, from the one or more acoustic receivers, reflected acoustic wave energy from the subterranean zone; and generating data associated with the subterranean zone based on the reflected acoustic wave energy.

In an aspect combinable with the example implementation, the data includes an image of the subterranean zone.

In another aspect combinable with any of the previous aspects, the liquid includes water.

In another aspect combinable with any of the previous aspects, the volume of liquid includes a natural body of water.

In another aspect combinable with any of the previous aspects, the natural body of water includes a surface coincident with the terranean surface.

In another aspect combinable with any of the previous aspects, the volume of liquid includes a human-made volume of liquid.

Another aspect combinable with any of the previous aspects further includes a container that encloses the volume of liquid.

In another aspect combinable with any of the previous aspects, the container is at least partially buried under the terranean surface.

In another aspect combinable with any of the previous aspects, the container is wholly buried under the terranean surface.

In another aspect combinable with any of the previous aspects, the operation of activating the acoustic energy source includes repeatedly activating the acoustic energy source to produce a plurality of acoustic wave energy that each travel through the volume of liquid and to the subterranean zone below the terranean surface.

In another aspect combinable with any of the previous aspects, each activation of the acoustic energy source occurs at a specified time interval apart from a previous activation of the acoustic energy source.

In another aspect combinable with any of the previous aspects, the operation of generating data associated with the subterranean zone based on the reflected acoustic wave energy includes generating an image of the subterranean zone that is associated with each activation of the acoustic energy source and a time instant or time interval to generate a plurality of time-dependent images of the subterranean zone.

In another aspect combinable with any of the previous aspects, the operations further include aggregating the plurality of time-dependent images of the subterranean zone into an image model of the subterranean zone.

In another aspect combinable with any of the previous aspects, the operations further include determining movement of an underground fluid through the subterranean zone based on the plurality of time-dependent images of the subterranean zone.

In another aspect combinable with any of the previous aspects, the underground fluid includes carbon dioxide.

In another aspect combinable with any of the previous aspects, the acoustic energy source includes a plurality of acoustic energy generators.

In another aspect combinable with any of the previous aspects, the operation of activating the acoustic energy source includes serially activating the plurality of acoustic energy generators to produce a plurality of acoustic wave energy that each travel through the volume of liquid and to the subterranean zone below the terranean surface.

In another aspect combinable with any of the previous aspects, each of the plurality of acoustic energy generators includes an explosive device.

In another aspect combinable with any of the previous aspects, the operations of activating the acoustic energy source includes serially activating the explosive devices to produce a plurality of acoustic wave energy that each travel through the volume of liquid and to the subterranean zone below the terranean surface .

Example implementations of apparatus, systems, and methods for delivering acoustic energy to a subterranean zone according to the present disclosure can include one, some, or all of the following features. For example, implementations according to the present disclosure can provide long-term (e.g., days, weeks, months, years) monitoring of characteristics of a subterranean formation and one or more fluids within the formation through acoustic (or seismic) source activation without disturbing or destroying the formation or other parts of a terranean surface or underground areas. As another example, existing well-developed marine seismic or acoustic sources (e.g., bubblers), many of which are inexpensive and repeatable, can be used in the present systems for delivering acoustic energy through the surface from a liquid source. Further, implementations according to the present disclosure can provide repeatable measurements since ground deformation is eliminated or minimized in the repeated measurements without disturbing soil. Thus, multiple repetitions of the measurements (e.g., hundreds, thousands) can be accomplished in a relatively static environment. Also, implementations according to the present disclosure can take advantage of measurements that include a liquid/soil interface, which have minimized forces and disturbances relative to the location in which the acoustic source is activated (since such forces decay with 1/r² or, in other words, inversely with a radial distance from the acoustic source activation). Implementations of the present disclosure are thus, during acoustic source activations, less likely to deform the ground, and also are less affected by the force of activation because a medium in which the source is activated (i.e., a liquid or other fluid or non-solid medium)d can readily change shape. Thus, implementations of the present disclosure yield repeatability, which leads to better measurements, reduced intrusiveness, potentially more controlled (or directed) energy, all of which improves a commercial viability of data acquisition/subsurface intelligence.

The details of one or more implementations of the subject matter of this specification are set forth in the description, the accompanying drawings, and the claims. Other features, aspects, and advantages of the subject matter will become apparent from the description, the claims, and the accompanying drawings.

### DESCRIPTION OF DRAWINGS

FIGS. 1A and 1B show an example implementation of a subsurface imaging system according to the present disclosure.
FIG. 2 shows another example implementation of a subsurface imaging system according to the present disclosure.
FIG. 3 shows a flowchart of an example method of operating a subsurface imaging system according to the present disclosure.
FIG. 4 is a graphic that shows an example image of a subsurface according to the present disclosure.
FIG. 5 shows an example of a control system for a subsurface imaging system according to the present disclosure.

### DETAILED DESCRIPTION

The present disclosure describes example implementations of a subsurface imaging system that includes one or more acoustic energy sources operable to produce acoustic wave energy that travels from at or near a terranean surface and is reflected (at least in part) by one or more subterranean formations, such as a subterranean zone. The reflected acoustic wave energy is received at one or more acoustic energy receivers at or near the terranean surface, which in conjunction with a control system communicably coupled to the one or more acoustic energy receivers, are operable to produce data associated with the subterranean zone based on the reflected acoustic energy. In example implementations according to the present disclosure, the one or more acoustic energy sources is submerged (at least partially) in a volume of liquid, which itself, can be positioned or located at or under the terranean surface. Thus, in example implementations, the acoustic wave energy produced by the one or more acoustic energy sources travels at least some distance through the volume of liquid prior to entering (or reflecting from) the subterranean zone.

In some aspects, the volume of liquid can facilitate repeated (e.g., serial) activations of the one or more acoustic (or seismic) energy sources in a manner that allows the terranean surface, the subterranean zone, and/or a surrounding environment to be relatively undisturbed with each activation. For instance, in example implementations where the one or more acoustic energy sources comprises one or more explosive devices, each activation of a particular explosive device can, in the absence of the volume of liquid, destroy or at least disturb (e.g., permanently) the surrounding environment. The volume of liquid, however disturbed by each activation, can generally return to a pre-activation state, thereby providing a repeatable, static (relatively) environment for the next activation and further activations.

Conventional acoustic energy sources that are or include explosive charges or devices that are buried, activation of such charges disturb subterranean formations and have gradually worsening seismic coupling (to a specific formation) if multiple blasts are used without reburying the charges. Thus, most blast-based acoustic (or seismic) sources are triggered once, then re-buried. For repetitive survey applications, there can be considerable expense and work associated with preparing each blast. For these repetitive sources, surface orbital vibrators are most common; however, for some applications, having a more transient source may also be useful.

Implementations of a subsurface imaging (or data collection) system can provide for a cross-sector subsurface intelligence platform that enables exploration, engagement with, and extraction of geologic resources at an industrially-applicable scale. Coupling high volume, high variety and sparse data with fast, cost efficient, machine learning-powered computational resources provides an integrated solution that scales across exploration, monitoring, and extraction sites and includes diverse use cases, such as subsurface resource exploration, or infrastructure monitoring. Such a platform can utilize industrial-scale aggregated sensing data to train machine learning models which are then capable of accurately predicting interactions in monitored domains and assessing uncertainty with high accuracy thus increasing operational safety and assurance in example domains that require engagement, such as earthquake or tsunami early warning systems, or site characterization and/or monitoring for geologic carbon sequestration, or hydrogeology.

Further, such a platform can be utilized to produce or refine the large-scale 3D geological models on which operations in these domains rely. Such a platform can also facilitate real-time investigation of complex sub-surface environments using multi-modal sensing. The real-time data collection and analysis can simplify response to immediate business needs in subsurface-exposed sectors (e.g., geologic carbon storage, geothermal energy, critical minerals). These needs can include uncertainty assessments, increasing operational safety and assurance, geothermal energy, mining, or operations optimization.

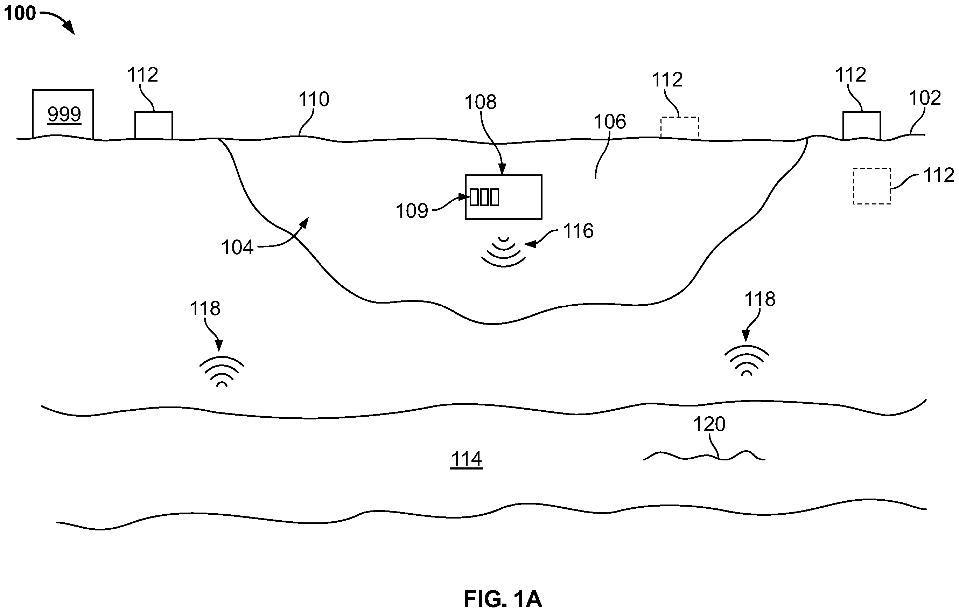

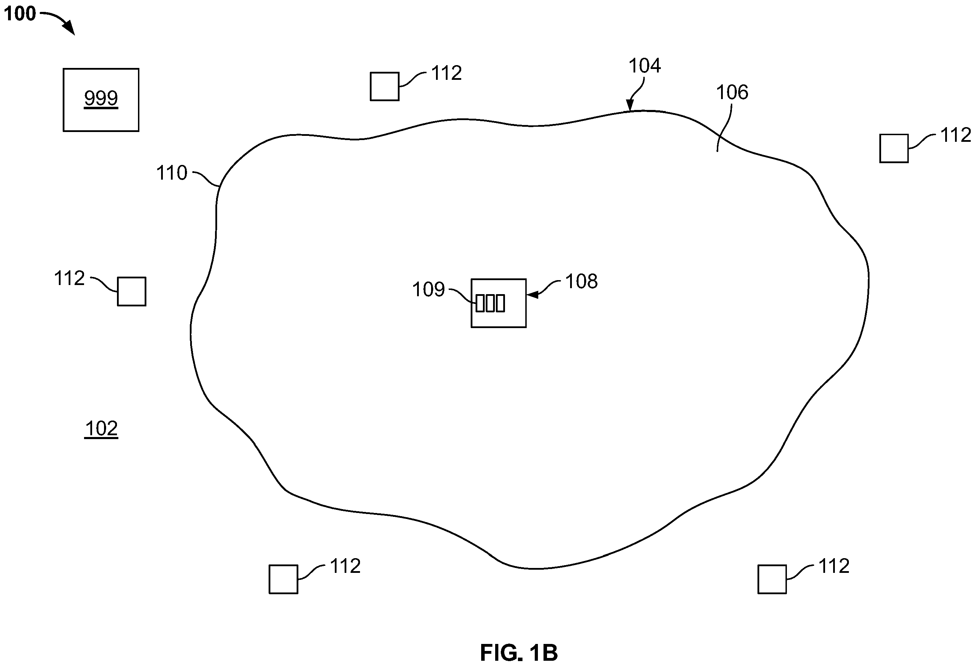

FIGS. 1A and 1B show an example implementation of a subsurface imaging system 100 according to the present disclosure. FIG. 1A shows a side view of the subsurface imaging system 100, while FIG. 1B shows a plan view of at least a portion of the subsurface imaging system 100. In this example, subsurface imaging system 100 includes a volume 104 of liquid 106 that is created, found, or otherwise near a terranean surface 102. As illustrated, the volume 104 includes a surface 110 that is coincident with the terranean surface 102 and exposed to an ambient atmosphere. The volume 104 in this example implementation can include or be one of several forms of liquid, such as a natural lake, river, creek, sea, gulf or other body of water (fresh or salt). The volume 104 can be a natural body of water that is at least partially located under the terranean surface 102, such as an aquifer or other underground source of water (fresh or brine) that is only partially (if at all) exposed to an ambient atmosphere. The volume 104 can be potable or non-potable water.

As other examples, the volume 104 can be a human-made volume 104 of liquid 106 (water or otherwise). For instance, the volume 104 can be a tank, pond, or pool that is open to an ambient atmosphere (such as for livestock or other purposes). Although FIG. 1A illustrates the volume 104 as at least partially sunken below the terranean surface, all or most of the volume 104 can be on or above (but in contact with) the terranean surface 102 (such as in the case of a human-made, above ground tank or pool).

Accordingly, volume 104 according to the present disclosure can encompass many different forms of containers of partial enclosures of liquid 106, each of which can conform to a portion of the terranean surface 102 or, in the case of human-made containers, the container itself. In the example implementations of the subsurface imaging system 100, at least a portion of the volume 104 is unbounded or unconstrained within the particular container (whether that is the terranean surface 102 or other container). Thus, as shown, the surface 110 of the volume 104 illustrates an unconstrained boundary of the liquid 106.

The liquid 106, in some aspects, is or is mostly water (fresh, rain, or brine). As in the case of the volume 104 being a natural body of water, there can be other fluids or solids mixed in with the liquid 106. However, in some aspects, the liquid 106 is not water but some other particular fluid (e.g., liquid, mixed-phase fluid), with a similar or different set of mechanical properties (e.g., viscosity, density, phase mix, etc.) than water (fresh or brine). For example, the liquid 106 can be a human-made fluid, such as oobleck (biodegradable) or other fluid where the mechanical properties are determined or selected to facilitate passage of acoustic energy waves therethrough.

The illustrated example of subsurface imaging system 100 includes one or more acoustic (or seismic) energy sources 108 that is at least partially submerged within, or in contact with, the liquid 106 of volume 104. In the present disclosure, "acoustic" and "seismic" can generally be used interchangeably to describe wave energy produced by the one or more sources 108. As shown in this example, the acoustic energy source 108 is submerged within the liquid 106; in alternative implementations, the source 108 can be positioned on the surface 110 of the volume 104 (e.g., floating or tethered to the terranean surface 102).

Generally, acoustic (or seismic) energy source 108 is any device or apparatus capable of (when activated) producing (e.g., repeatedly) acoustic (or seismic) wave energy 116 that travels or is directed toward a subterranean zone 114 (e.g., explosive devices, sondes, sonar transducers, surface orbital vibrators, bubblers or other marine acoustic sources, etc.). Generally, the energy 116 radiates isotropically. Moreover, the energy 116 generates a force at an interface of the volume 104 and the ground formation in which the volume 114 is located (in other words, at the interface of liquid 106 and soil/rock) that is less than (and in some aspects, substantially less than) a force generated at the acoustic energy source 108, itself, since force decays inversely with distance (radial) squared from the source. Thus, at the liquid/soil interface there is less deformation of the soil compared to an acoustic source that is activated in the ground, itself. Such a minimization of disturbance of this interface can mean that the ground remains relatively undisturbed with a single activation of the source 108, and also allows for the repeated activations of the source 108 without having to "repair" disturbed ground.

Subterranean zone 114, in some aspects, can be comprised of one or more homo or heterogeneous rock layers or formations under the terranean surface 102. The subterranean zone 114 can be, for example, 10s, 100s, 1000s, or even 10,000s of feet below the terranean surface 102. In some aspects, the subterranean zone 114 can be carbon dioxide sequestration formation (in which carbon dioxide 120 can be sequestered), a hydrogen bearing formation that holds static or mobile hydrogen 120, or other type of formation (water or brine bearing, for example). Thus, in example implementations, the subterranean zone 114 can be a sequestration reservoir, with a static or mobile sequestered fluid 120, such as carbon dioxide or other fluid injected therein during a sequestration process.

In some aspects, the acoustic energy source 108 comprises multiple (10s, 100s, 1000s, or otherwise) explosive charges 109, each of which is separately (serially or in parallel) activatable to produce the acoustic wave energy 116. Thus, as a repeatedly activatable source, the source 108 can produce multiple sets of acoustic wave energy 116 over a particular time period (e.g., seconds, minutes, days, months, years), whether as an explosive or non-explosive acoustic energy source 108. Each activation of the acoustic energy source 108, therefore, produces independent acoustic wave energy 116 that can travel at least partially through the liquid 106 and toward subterranean zone 114.

Continuing with the example implementation of FIGS. 1A and 1B, the subsurface imaging system 100 includes one or more acoustic energy receivers 112 (e.g., geophones, MEMS sensors, fiber optic DAS as examples) that are positioned to receive reflected acoustic wave energy 118 from the subterranean zone 114. As shown in this example, acoustic energy receivers 112 can be positioned on or under the terranean surface 102, on the surface 110 of the volume 104 (e.g., floating) or in a combination of locations thereof. In some aspects, such as shown in FIG. 1B, the acoustic energy receivers 112 can be placed at regular intervals about the volume 104 on the terranean surface 102.

In this example of the subsurface imaging system 100, a control system 999 is communicably coupled to (or operable to communicably couple to) the acoustic energy source 108 or the acoustic energy receiver(s) 112, or both. In some aspects, the control system 999 comprises a microprocessor-based control system configured to execute instructions (e.g., through software) to perform operations of the subsurface imaging system 100 as described in the present disclosure. For example, the control system 999 can be programmed or instructed to activate the acoustic energy source 108 (once or repeatedly, in serial or parallel fashion) to produce the acoustic wave energy 116. The control system 999 can be programmed or instructed to receive or identify data associated with the reflected acoustic wave energy 118 (e.g., amplitude, frequency, noise, etc.) from the acoustic energy receiver(s) 112. The control system 999 can further be programmed or instructed to evaluate the data associated with the reflected acoustic wave energy 118 to determine information about the subterranean zone 114, such as, for example, geologic data (porosity, permeability, rock type, etc.), one or more fluids found in the zone 114 (such as fluid 120), imagery of the subterranean zone 114 (at a time instant and/or over a time duration), or a combination thereof.

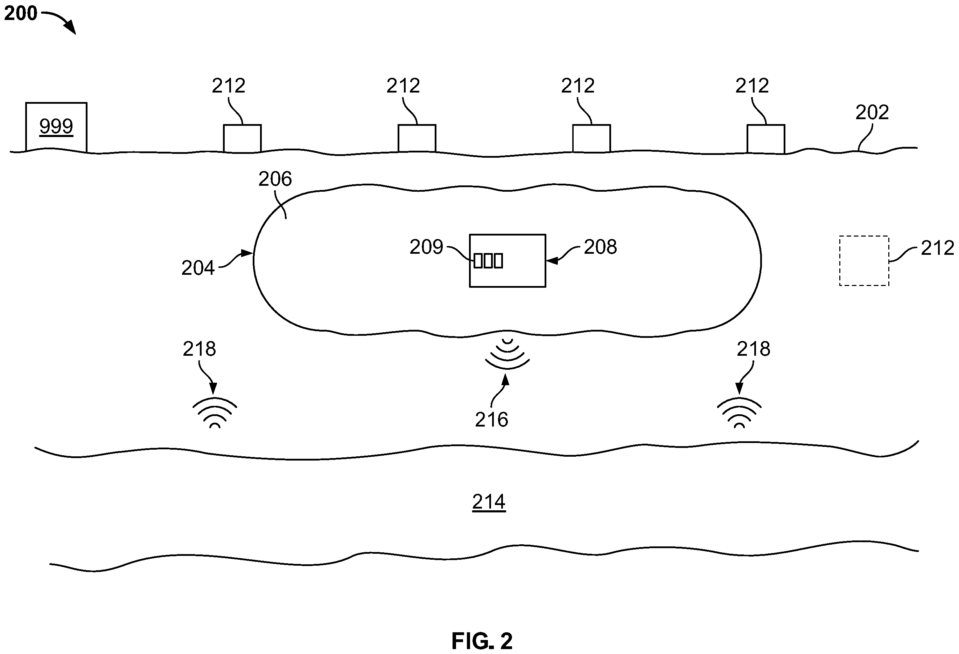

FIG. 2 shows another example implementation of a subsurface imaging system 200 according to the present disclosure. In this example, subsurface imaging system 200 includes a container 204 of liquid 206 that is positioned under (completely or partially) a terranean surface 202. The container 204 in this example implementation, can be a tank made of a rigid or semirigid material (e.g., metallic or non-metallic) that holds the liquid 206. In some aspects, the liquid 206 fully fills a volume of the container 204; alternatively, the container 204 has an inner volume that is greater than a total volume of the liquid 206.

Although FIG. 2 illustrates the container 204 as fully positioned (e.g., buried) below the terranean surface, some of the container 204 can be exposed above the terranean surface 202. In this example, the container 204 defines a boundary that constrains the liquid 206 therein. Thus, when acoustic wave energy is generated within the container 204 and travels through and disturbs the liquid 206 (as explained in more detail herein) but does not escape the container 204 and eventually returns to a static or undisturbed state within the container 204.

As with the liquid 106, the liquid 206, in some aspects, is or is mostly water (fresh, rain, or brine). There can be other fluids or solids mixed in with the liquid 206. However, in some aspects, the liquid 206 is not water but some other particular fluid (e.g., liquid, mixed-phase fluid), with a similar or different set of mechanical properties (e.g., viscosity, density, phase mix, etc.) than water (fresh or brine). For example, the liquid 206 can be a human-made fluid, such as oobleck (biodegradable) or other fluid where the mechanical properties are determined or selected to facilitate passage of acoustic energy waves therethrough.

Like subsurface imaging system 100, the illustrated example of subsurface imaging system 200 includes one or more acoustic (or seismic) energy sources 208 that, in this example, is positioned within the container 204. As shown in this example, the acoustic energy source 208 is submerged within the liquid 206; in alternative implementations, the source 208 can be positioned on an inner surface of the container 204 (e.g., attached to the container 204). Generally, acoustic energy source 208 is any device or apparatus capable of (when activated) producing (e.g., repeatedly) acoustic wave energy 216 that travels or is directed toward a subterranean zone 214 (e.g., explosive devices, sondes, sonar transducers, etc.).

Subterranean zone 214, in some aspects, can be comprised of one or more homo or heterogeneous rock layers or formations under the terranean surface 202. The subterranean zone 214 can be, for example, 10s, 100s, 1000s, or even 10,000s of feet below the terranean surface 202. In some aspects, the subterranean zone 214 can be carbon dioxide sequestration formation (in which carbon dioxide 220 can be sequestered), a hydrogen bearing formation that holds static or mobile hydrogen 220, or other type of formation (water or brine bearing, for example). Thus, in example implementations, the subterranean zone 214 can be a sequestration reservoir, with a static or mobile sequestered fluid 220, such as carbon dioxide or other fluid injected therein during a sequestration process.

In some aspects, the acoustic energy source 208 comprises multiple (10s, 100s, 1000s, or otherwise) explosive charges 209, each of which is separately (serially or in parallel) activatable to produce the acoustic wave energy 216. Thus, as a repeatedly activatable source, the source 208 can produce multiple sets of acoustic wave energy 216 over a particular time period (e.g., seconds, minutes, days, months, years), whether as an explosive or non-explosive acoustic energy source 208. Each activation of the acoustic energy source 208, therefore, produces independent acoustic wave energy 216 that can travel at least partially through the liquid 206 and toward subterranean zone 214.

Continuing with the example implementation of FIG. 2, the subsurface imaging system 200 includes one or more acoustic energy receivers 212 that are positioned to receive reflected acoustic wave energy 218 from the subterranean zone 214. As shown in this example, acoustic energy receivers 212 can be positioned on or under the terranean surface 202. As with the subsurface imaging system 100, the acoustic energy receivers 212 can be placed at regular intervals surrounding the container 204 on the terranean surface 202.

In this example of the subsurface imaging system 200, the control system 999 is communicably coupled to (or operable to communicably couple to) the acoustic energy source 208 or the acoustic energy receiver(s) 212, or both. In the example implementation of subsurface imaging system 200, the control system 999 can be programmed or instructed to activate the acoustic energy source 208 (once or repeatedly, in serial or parallel fashion) to produce the acoustic wave energy 216. The control system 999 can be programmed or instructed to receive or identify data associated with the reflected acoustic wave energy 218 (e.g., amplitude, frequency, noise, etc.) from the acoustic energy receiver(s) 212. The control system 999 can further be programmed or instructed to evaluate the data associated with the reflected acoustic wave energy 218 to determine information about the subterranean zone 214, such as, for example, geologic data (porosity, permeability, rock type, etc.), one or more fluids found in the zone 214 (such as fluid 220), imagery of the subterranean zone 214 (at a time instant and/or over a time duration), or a combination thereof.

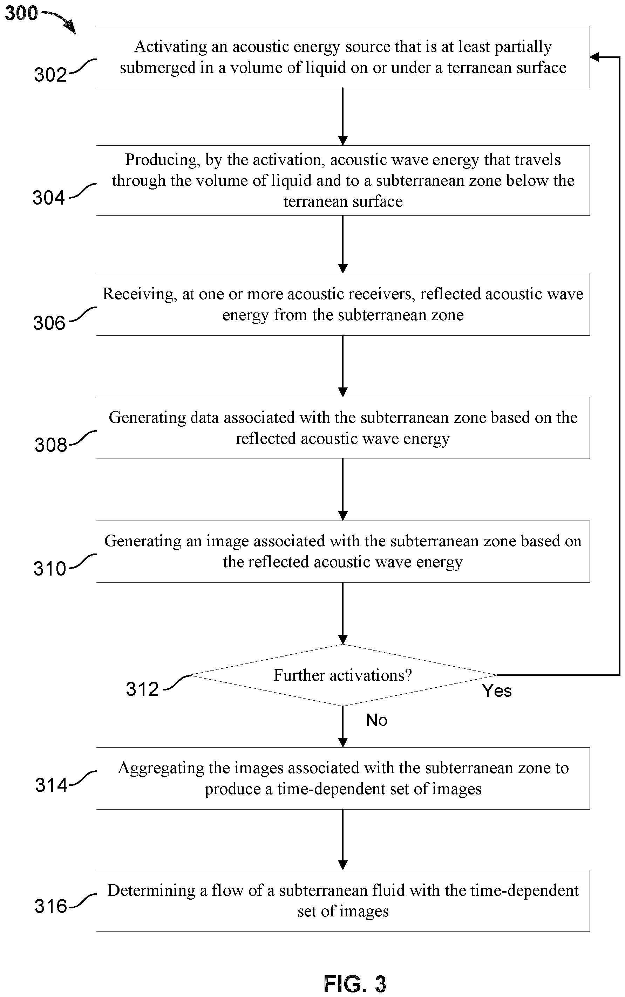

FIG. 3 shows a flowchart of an example method 300 of operating a subsurface imaging system according to the present disclosure. This example method 300 can be implemented by or with the subsurface imaging system 100, the subsurface imaging system 200, or a subsurface imaging system according to the present disclosure. One or more of the steps shown in the example method 300 can be completed by or with the control system 999. Method 300 can begin at step 302, which includes activating an acoustic energy source that is at least partially submerged in a volume of liquid on or under a terranean surface. For example, the acoustic energy source can be placed (submerged in whole or partially) within a volume of liquid (e.g., water or otherwise) that is part of a natural or man-made body of water (as described with reference to FIGS. 1A and 1B) or enclosed within a container (as described with reference to FIG. 2). The acoustic energy source can be or include one or more explosive charges, or a non-explosive source, such as a sonar source or other device that can be activated (once or repeatedly) to produce acoustic wave energy.

Method 300 can continue at step 304, which includes producing, by the activation, acoustic wave energy that travels through the volume of liquid and to a subterranean zone below the terranean surface. For example, once activated, the acoustic energy source provides acoustic wave energy that is directed toward the subterranean zone and, in some aspects, travels through a portion of the liquid before reaching the subterranean zone. When traveling through the liquid, the acoustic wave energy (as well as activation of the acoustic energy source) may temporarily disturb the liquid in the volume. However, activation of the acoustic energy source may not permanently damage or destroy subterranean formations (or a terranean surface) near the acoustic energy source.

Method 300 can continue at step 306, which includes receiving, at one or more acoustic receivers, reflected acoustic wave energy from the subterranean zone. For example, as shown in the example implementations shown in FIGS. 1A and 2, acoustic energy receivers can be positioned on or under the terranean surface, as well as, in some cases, on a surface of the volume of liquid. The acoustic wave energy provided by the acoustic energy source can in part travel through the subterranean zone and in part reflect off the subterranean zone (e.g., depending on a composition of solids and fluids that make up the subterranean zone) back toward the terranean surface. The positioned acoustic energy receivers receive the reflected acoustic wave energy.

Method 300 can continue at step 308, which includes generating data associated with the subterranean zone based on the reflected acoustic wave energy. For example, the reflected acoustic wave energy received at the acoustic energy receivers can be further provided (in raw or processed form) to the control system. Based on the reflected acoustic wave energy, one or more characteristics of the subterranean zone can be determined by the control system. For example, geologic parameters such as permeability, porosity, composition (e.g., solid matrix relative to fluid or empty space within the matrix), and other characteristics can be determined or calculated by the control system.

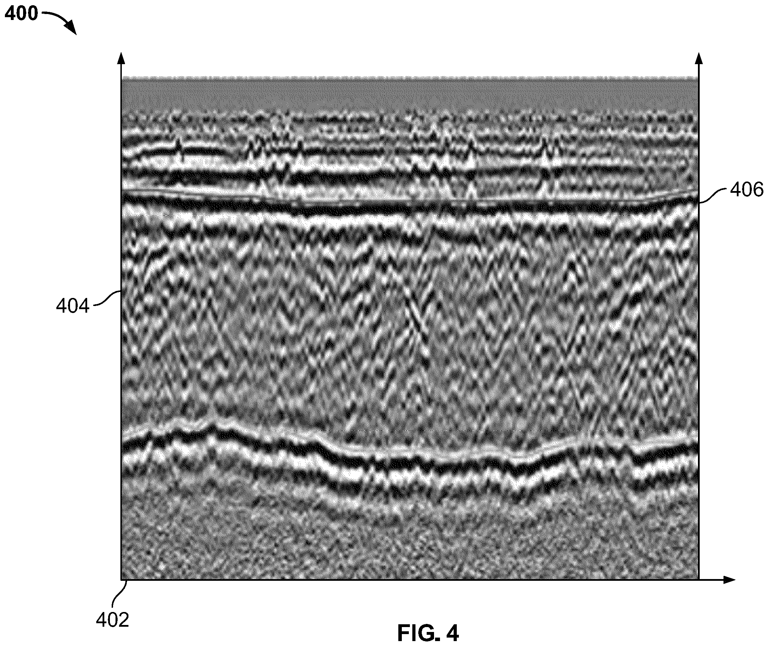

Method 300 can continue at step 310, which includes generating an image associated with the subterranean zone based on the reflected acoustic wave energy. For example, as part of the data generated by the control system or as an extension of the data generated by the control system, a subsurface image of the subterranean zone can be generated. As a non-limiting example of a subsurface image that can be generated, FIG. 4 shows subsurface image 400. As shown, the image data based on the reflected acoustic wave energy is defined by an x-axis 402 of position (in meters or other one-dimensional distance units), a y-axis 404 of time (in milliseconds or some other time unit), and a y-axis 406 of depth (in millimeters or some other one-dimensional distance units). Image 400 is just one of many example subsurface images that can be generated according to the present disclosure.

Method 300 can continue at step 312, which includes a decision as to whether there are any further activations of the acoustic energy source. For example, in some aspects, it may be desirable to generate multiple, time-dependent data points (or sets, including images) of the subterranean zone by repeating steps 302 through 308 (or 310) a number of times (e.g., 10s, 100s, 1000s). Thus, if the decision in step 312 is to proceed with further activations of the acoustic energy source, then method 300 can return to step 302.

Generating multiple, time-dependent sets of data (and/or images) associated with the subterranean zone based on the reflected acoustic wave energy can provide for several advantages. For example, generating time-dependent data can provide for better insight and knowledge of the subterranean zone over time, including, for instance, how a subterranean fluid (e.g., liquid, gas, or multi-phase fluid) flows (through forced circulation, such as carbon dioxide sequestration operations) or migrates (e.g., naturally for some fluids) through the subterranean zone over time. As another example, the time-dependent data can provide knowledge and information about the geologic properties of a rock formation of the subterranean zone over time and how such properties can change (e.g., based on sequestration operations, hydrogen production operations, or otherwise). As a further example, the time-dependent data can provide knowledge and information regarding seismic events that affect the subterranean zone over time, whether such events are natural (e.g., earthquakes, etc.) or potentially human-caused (e.g., through brine disposal wells). Thus, by executing multiple iterations of steps 302-308 (or 310), this time dependent, reflected acoustic wave energy data can be collected and processed.

In some aspects, each iteration of step 302 can occur independently and in a nondestructive manner for its immediate surroundings, because the source is submerged (at least partially and in some cases wholly) in the volume of liquid. In some aspects, each iteration of step 302 simply includes activating the acoustic energy source in the case of a sonar, air gun source, or other repeatably activated source. In some aspects, in the case of the acoustic energy source comprising multiple explosive charges, each activation (e.g., each iteration of step 302) can include independently activating a separate explosive charge. In some aspects, there can be a minimum or desired time duration between iterations of step 302, such as to allow the volume of liquid to return to a static or mostly static state after being disturbed by the activation of the acoustic energy source.

In some aspects, the reflected acoustic wave energy returns to the acoustic energy receiver(s) with "noise," such as multiples and other artifacts in the reflected energy that do not represent the physical reality of the subterranean zone. In conventional seismic operations (such as in hydrogen exploration), noise must often be removed from the reflected energy data before accurate determinations of data based on the reflected energy can be made. However, such noise (e.g., multiples) need not be removed from the time-dependent data that is generated by iterating steps 302-308 (or -310). This is because, generally, the noise is consistent or substantially consistent for each iteration and therefore can be easily determined and ignored.

If the decision in step 312 is to not repeat an activation of the acoustic energy source (e.g., after a single or many iterations of steps 302-308 or -310), then method 300 can continue at step 314, which includes aggregating the images associated with the subterranean zone to produce a time-dependent set of images. For example, if several iterations of steps 302-310 are executed, then all of the images can be combined into a time-dependent or dynamic set of images (and data) that show changes to the subterranean zone over time. Of course, if only a single iteration of steps 302-310 is executed, then step 314 can only include, for example, storing the data and image associated with the single iteration.

Method 300 can continue at step 316, which includes determining a flow of a subterranean fluid with the time-dependent set of images. For example, as described, a time-dependent set of data and/or images generated over multiple (10s, 100s, 1000s) iterations of steps 302-310 can provide for a dynamic or "video" image of the subterranean zone, including movement of any fluid(s) within the subterranean zone. The fluid movement can be identified through the dynamic image and provide for information, e.g., about a movement of carbon dioxide through and into the subterranean zone during sequestration.

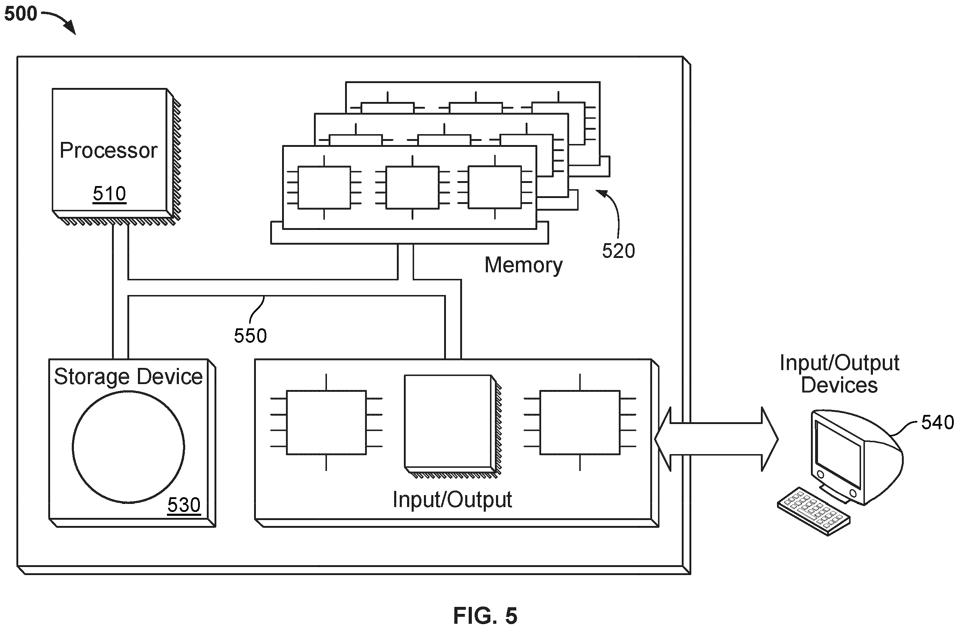

FIG. 5 is a schematic illustration of an example controller 500 (or control system) for controlling operations of a subsurface imaging system according to the present disclosure. For example, the controller 500 may include or be part of the control system 999 shown in FIGS. 1A, 1B, and 2. The controller 500 is intended to include various forms of digital computers, such as printed circuit boards (PCB), processors, digital circuitry, or otherwise parts of a biocide testing system. Additionally, the system can include portable storage media, such as, Universal Serial Bus (USB) flash drives. For example, the USB flash drives may store operating systems and other applications. The USB flash drives can include input/output components, such as a wireless transmitter or USB connector that may be inserted into a USB port of another computing device.

The controller 500 includes a processor 510, a memory 520, a storage device 530, and an input/output device 540. Each of the components 510, 520, 530, and 540 are interconnected using a system bus 550. The processor 510 is capable of processing instructions for execution within the controller 500. The processor may be designed using any of a number of architectures. For example, the processor 510 may be a CISC (Complex Instruction Set Computers) processor, a RISC (Reduced Instruction Set Computer) processor, or a MISC (Minimal Instruction Set Computer) processor.

In one implementation, the processor 510 is a single-threaded processor. In another implementation, the processor 510 is a multi-threaded processor. The processor 510 is capable of processing instructions stored in the memory 520 or on the storage device 530 to display graphical information for a user interface on the input/output device 540.

The memory 520 stores information within the controller 500. In one implementation, the memory 520 is a computer-readable medium. In one implementation, the memory 520 is a volatile memory unit. In another implementation, the memory 520 is a non-volatile memory unit.

The storage device 530 is capable of providing mass storage for the controller 500. In one implementation, the storage device 530 is a computer-readable medium. In various different implementations, the storage device 530 may be a floppy disk device, a hard disk device, an optical disk device, or a tape device.

The input/output device 540 provides input/output operations for the controller 500. In one implementation, the input/output device 540 includes a keyboard and/or pointing device. In another implementation, the input/output device 540 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier, for example, in a machine-readable storage device for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random-access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer. Additionally, such activities can be implemented via touchscreen flat panel displays and other appropriate mechanisms.

The features can be implemented in a control system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include a local area network ("LAN"), a wide area network ("WAN"), peer-to-peer networks (having ad-hoc or static members), grid computing infrastructures, and the Internet.

While this specification contains many specific implementation details, these should not be construed as limitations on the scope of any inventions or of what may be claimed, but rather as descriptions of features specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

A number of implementations have been described. Nevertheless, it will be understood that various modifications may be made without departing from the spirit and scope of the disclosure. For example, example operations, methods, or processes described herein may include more steps or fewer steps than those described. Further, the steps in such example operations, methods, or processes may be performed in different successions than that described or illustrated in the figures. Accordingly, other implementations are within the scope of the following claims.

## Claims

1. A method, comprising:
activating an acoustic energy source that is at least partially submerged in a volume of liquid on or under a terranean surface;
based on the activating, producing acoustic wave energy that travels through the volume of liquid and to a subterranean zone below the terranean surface;
receiving, at one or more acoustic receivers, reflected acoustic wave energy from the subterranean zone; and
generating, with a control system, data associated with the subterranean zone based on the reflected acoustic wave energy.

2. The method of claim 1, wherein the data comprises an image of the subterranean zone.

3. The method of claim 1, wherein the liquid comprises water.

4. The method of claim 1, wherein the volume of liquid comprises a natural body of water, optionally a surface coincident with the terranean surface.

5. The method of claim 1, wherein the volume of liquid comprises a human-made volume of liquid.

6. The method of claim 5, wherein the human-made volume of liquid is enclosed within a container, wherein the container is optionally at least partially buried under the terranean surface and optionally wholly buried under the terranean surface.

7. The method of claim 1, further comprising:
repeatedly activating the acoustic energy source; and
for each activation, producing acoustic wave energy that travels through the volume of liquid and to the subterranean zone below the terranean surface.

8. The method of claim 7, wherein each activation of the acoustic energy source occurs at a specified time interval apart from a previous activation of the acoustic energy source.

9. The method of claim 8, wherein generating data associated with the subterranean zone based on the reflected acoustic wave energy comprises:
generating, with the control system, an image of the subterranean zone that is associated with each activation of the acoustic energy source and a time instant or time interval to generate a plurality of time-dependent images of the subterranean zone.

10. The method of claim 9, further comprising aggregating, with the control system, the plurality of time-dependent images of the subterranean zone into an image model of the subterranean zone.

11. The method of claim 9, further comprising determining, with the control system, movement of an underground fluid, optionally carbon dioxide, through the subterranean zone based on the plurality of time-dependent images of the subterranean zone.

12. The method of claim 1, wherein the acoustic energy source comprises a plurality of acoustic energy generators.

13. The method of claim 12, further comprising:
serially activating the plurality of acoustic energy generators; and
for each activation, producing acoustic wave energy that travels through the volume of liquid and to the subterranean zone below the terranean surface,
or wherein each of the plurality of acoustic energy generators comprises an explosive device, and optionally further comprising:
serially activating the explosive devices; and
for each activation, producing acoustic wave energy that travels through the volume of liquid and to the subterranean zone below the terranean surface.

14. The method of claim 1, wherein the one or more acoustic receivers is positioned on or under the terranean surface.

15. A system, comprising:
an acoustic energy source that is at least partially submerged in a volume of liquid on or under a terranean surface;
one or more acoustic receivers positioned on or under the terranean surface; and
a control system communicably coupled to the acoustic energy source and the one or more acoustic receivers, the control system configured to perform operations comprising:
activating the acoustic energy source to produce acoustic wave energy that travels through the volume of liquid and to a subterranean zone below the terranean surface;
identifying, from the one or more acoustic receivers, reflected acoustic wave energy from the subterranean zone; and
generating data associated with the subterranean zone based on the reflected acoustic wave energy.
